# EUROPÄISCHE PATENTSCHRIFT

(11) **EP 3 740 690 B1**
(45) Veröffentlichungstag und Bekanntmachung des Hinweises auf die Patenterteilung: **13.07.2022**
(21) Anmeldenummer: 18839522.2
(22) Anmeldetag: 19.12.2018
(51) Int. Cl.: F16D 1/02, F16B 7/04, F16D 1/08

(54) **ANTRIEBSVORRICHTUNG, AUFWEISEND ZUMINDEST EINE KUPPLUNG UND EINE WELLE**
DRIVE DEVICE, COMPRISING AT LEAST ONE CLUTCH AND ONE SHAFT
DISPOSITIF D'ENTRAÎNEMENT COMPRENANT AU MOINS UN EMBRAYAGE ET UN ARBRE

(30) Priorität: 19.01.2018 DE 102018000947
(43) Veröffentlichungstag der Anmeldung: 25.11.2020
(73) Patentinhaber: SEW-EURODRIVE GmbH & Co. KG, 76646 Bruchsal (DE)
(72) Erfinder: MERKEL, Philipp, 76307 Karlsbad (DE)
(86) Internationale Anmeldenummer: PCT/EP2018/025327
(87) Internationale Veröffentlichungsnummer: WO 2019/141342

(56) Entgegenhaltungen:
- WO-A1-2017/094171
- CN-Y- 200 968 362
- DE-A1-102011 013 887
- DE-U1- 20 300 724
- US-A- 4 830 297

## Beschreibung

Die Erfindung betrifft eine Antriebsvorrichtung, aufweisend zumindest eine Kupplung und eine Welle.

**Aus der** DE 10 2011 013 887 A1 **ist als eine kraftschlüssige Verbindung eine Klemmkupplung zur drehfesten Verbindung zweier drehender Teile bekannt.**

**Aus der** DE 203 00 724 U1 **ist als nächstliegender Stand der Technik eine Klemmnabe bekannt.**

**Aus der** WO 2017 / 094171 A1 **ist eine Wellenkupplung bekannt.**

**Aus der** CN 200 968 362 Y **ist eine Klemmverbindung bekannt.**

**Aus der** US 4 830 297 A **ist eine Seilwinde bekannt.**

Der Erfindung liegt daher die Aufgabe zugrunde, eine Klemmkupplung einer Antriebsvorrichtung weiterzubilden.

Erfindungsgemäß wird die Aufgabe bei der Antriebsvorrichtung nach den in Anspruch 1 angegebenen Merkmalen gelöst.

Von Vorteil der Antriebsvorrichtung nach Anspruch 1 ist dabei, dass eine Begrenzung der Schlitzweite erreichbar ist und somit beim Herausschrauben der Schraube deren Schraubenkopf am Stift anliegt und daher der Klemmbereich aufgeweitet wird. Dies erfolgt sogar bei vorhandener Korrosion mit geringem Kraftaufwand.

Bei einer vorteilhaften Ausgestaltung ist der Stift axial ausgerichtet. Von Vorteil ist dabei, dass eine einfache Herstellung ermöglicht ist.

Bei einer vorteilhaften Ausgestaltung ist der Stift axial ausgerichtet und beidseitig im Klemmbereich aufgenommen, wobei er in einer ersten axial gerichteten Bohrung des Klemmbereichs zumindest teilweise aufgenommen ist und wobei er in einer zweiten, axial gerichteten Bohrung zumindest teilweise aufgenommen ist,
wobei die erste Bohrung durch den Klemmbereich durchgehend ausgeführt ist, insbesondere in den Raumbereich der Stufenbohrung mündend ausgeführt ist,
wobei die zweite Bohrung durchgehend durch Klemmbereich ausgeführt ist, insbesondere in den Raumbereich der Stufenbohrung mündend ausgeführt ist. Von Vorteil ist dabei, dass der Stift stabil gelagert ist. Insbesondere ist er an zumindest zwei Punkten gelagert. Da die zweite Bohrung als durchgehende Bohrung ausgeführt wird, ist beim Einstecken des Stiftes in die zweite Bohrung keine entgegenwirkende Luftpressung vorhanden, so dass die notwendige Fügekraft verringert ist.

Mittels der Pressverbindung ist der Stift mit dem Klemmbereich fest verbunden und ragt in die Langlochbohrung hinein. Das Anschlagen des Stifts an die Berandung des Langlochs begrenzt somit den Wertebereich für den Wert der Schlitzweite des Schlitzes.

Bei einer vorteilhaften Ausgestaltung weist die Antriebsvorrichtung einen Elektromotor auf, dessen Welle mittels der Kupplung mit der eintreibenden Welle eines Getriebes der Antriebsvorrichtung verbunden ist,
Bei einer vorteilhaften Ausgestaltung ist die Kupplung in einem Adaptergehäuse angeordnet, welches eine durchgehende Ausnehmung aufweist, welche den von der Schraube überdeckten axialen Bereich überdeckt.

Bei einer vorteilhaften Ausgestaltung weist die Antriebsvorrichtung einen Elektromotor auf, dessen Welle mittels der Kupplung mit der eintreibenden Welle eines Getriebes der Antriebsvorrichtung verbunden ist,
wobei die Kupplung in einem Adaptergehäuse, insbesondere Gehäuseteil, angeordnet ist, welches eine durchgehende Ausnehmung aufweist, welche den von der Schraube überdeckten axialen Bereich überdeckt, insbesondere so dass ein Werkzeug zum Betätigen der Schraube durch die durchgehende Ausnehmung durchführbar ist. Von Vorteil ist dabei, dass zur Herstellung das Getriebe zunächst mit dem Adapter verbunden wird, also die Adapterwelle samt verbundenem Verzahnungsteil ins Getriebe eingeschoben wird. Axial neben dem Lager der Adapterwelle ist im Adapter ein Wellendichtring angeordnet. Auf diese Weise ist das Getriebeöl des Innenraums des Getriebes ferngehalten vom Innenraum des Adapters, also auch von dem die Klauenkupplung aufnehmenden Innenraumbereich des Adapters. Nach Verbinden des Adapters mit dem Getriebe ist somit der Motor an den Adapter anschraubbar, wobei die Motorwelle in den Klemmbereich der Kupplung des Adapters eingesteckt wird. Die Betätigung der Klemmverbindung ist dann durch die durchgehende Ausnehmung hindurch ermöglicht.

Bei einer vorteilhaften Ausgestaltung ist das Adaptergehäuse, insbesondere das Gehäuseteil, schraubverbunden mit einem Gehäuseteil des Elektromotors und mit einem Gehäuseteil des Getriebes,
wobei das Adaptergehäuse einen Kanal aufweist, welcher in den Innenraum des Getriebes oder in eine durch das Gehäuseteil des Getriebes durchgehende Ausnehmung mündet,
wobei der Kanal zur Umgebung hin mit einer Entlüftungsschraube, insbesondere mit einer eine semipermeable Membran aufweisenden Entlüftungsschraube, verschlossen ist, insbesondere derart, dass ein Luftdruckausgleich vom Innenraum des Getriebes zur Umgebung hin erfolgt, aber kein Austritt von Getriebeöl. Von Vorteil ist dabei, dass die Entlüftung des Getriebes über den Adapter ausgeführt wird. Somit muss im Getriebegehäuse keine durchgehende Ausnehmung vorgesehen werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erstes Kupplungsteil 1 eines ersten erfindungsgemäßen Ausführungsbeispiel dargestellt.

In der Figur 2 ist eine zur Figur 1 zugehörige Seitenansicht dargestellt.

In der Figur 3 ist eine Schrägansicht eines vergrößerten Ausschnitts des ersten Kupplungsteils 1 gezeigt.

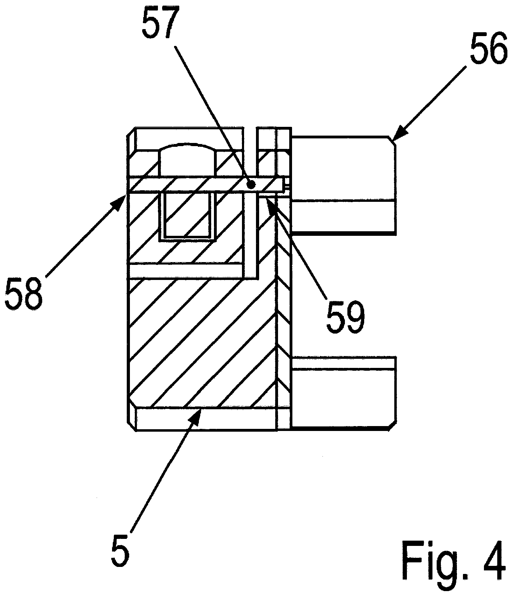

In der Figur 4 ist das erste Kupplungsteil 1 im Querschnitt dargestellt.

In der Figur 5 ist ein zwischen einem Motor und einem Getriebe anordenbarer Adapter mit einer das erste Kupplungsteil 1 aufweisenden Klauenkupplung gezeigt.

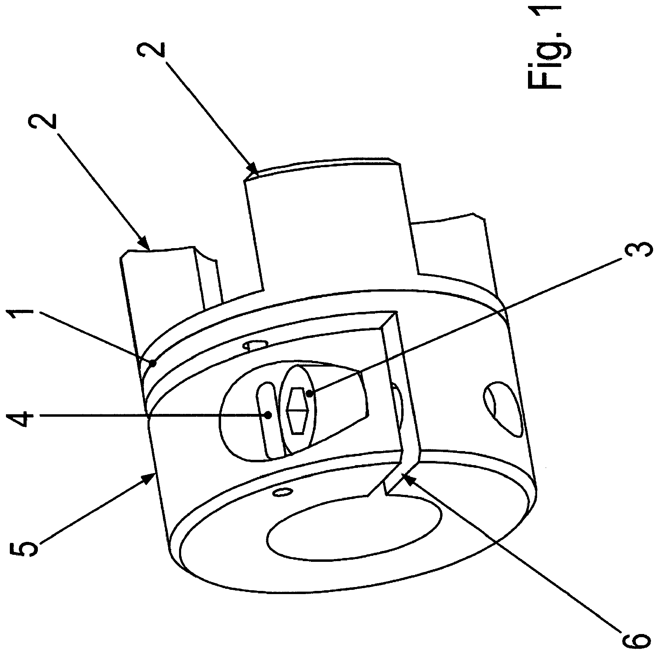

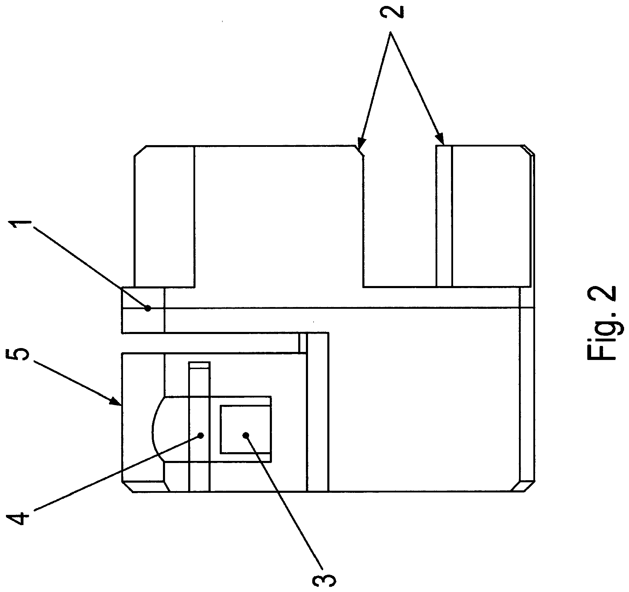

Wie in den Figuren 1 und 2 dargestellt, weist das Kupplungsteil 1 an seinem Grundbereich einstückig, also einteilig, angeformte Klauenbereiche 2 auf, die axial hervorstehen und in Umfangsrichtung voneinander regelmäßig beabstandet sind. Mittels der Klauenbereiche 2 ist das Kupplungsteil 1 in Umfangsrichtung formschlüssig mit einem weiteren Kupplungsteil verbunden.

Das Kupplungsteil 1 weist an der von den Klauenbereichen 2 axial abgewandten Seite des Grundbereichs einen am Grundbereich einstückig, also einteilig, angeformten Klemmbereich 5 auf, der somit axial beabstandet ist von den Klauenbereichen 2. Der Grundbereich ist axial zwischengeordnet zwischen den Klauenbereichen 2 und dem Klemmbereich 5.

Der Klemmbereich 5 ist als Ring ausgeformt, welcher einen axial und radial durchgehenden Schlitz 6 aufweist.

Der Klemmbereich 5 ist an einem Anformbereich mit dem Grundbereich verbunden, wobei der Anformbereich zwischen einem ersten und einem zweiten Radialabstandsbereich angeordnet ist und zwischen einem ersten und zweiten Umfangswinkelbereich angeordnet ist.

Der Klemmbereich 5 ist auf eine Welle, insbesondere Hohlwelle, aufgesteckt und klemmverbunden.

Hierzu ist eine tangential gerichtete, durch den Schlitz 6 durchgeführte Stufenbohrung in den Klemmbereich 5 eingebracht, wobei die Stufenbohrung auf der ersten Seite, insbesondere unterhalb, des Schlitzes 6 als Gewindebohrung ausgeführt ist. Die Stufe ist auf der anderen Seite, insbesondere oberhalb, des Schlitzes 6 angeordnet, so dass der Schraubenkopf einer in die Gewindebohrung eingeschraubten Schraube 3 an der Stufe anliegt. Die Gewindebohrung ist vorzugsweise sacklochartig ausgeführt.

Vom Schlitz 6 weiter beabstandet als der Schraubenkopf der Schraube 3 ist ein axial gerichteter Stift 4 in eine in den Klemmbereich 5 eingebrachte Bohrung eingesteckt. Die Bohrung ist zweiteilig ausgeführt, da sie durch den Raumbereich der Stufenbohrung unterbrochen ist. Somit ragt ein mittlerer Bereich des Stiftes 4 aus der Bohrung hervor durch den Raumbereich der Stufenbohrung hindurch.

Der Stift 4 ist somit beidseitig abgestützt und daher sehr stabil gehalten. Da die Bohrung von der vom Grundbereich aus abgewandten Seite des Klemmbereichs 5 hereingebracht ist, geht die Bohrung durch den ersten Teil der Bohrung hindurch und ist im anderen Teil als Sacklochbohrung ausgeführt.

Der Stift 4 ist in die Bohrung eingepresst, also pressverbunden gehalten. Zusätzlich oder alternativ ist auch eine Körnung vorsehbar, also ein Halten des Stiftes 4 durch Verformen von Material des Stiftes 4, so dass dieses Material ans Material des Klemmbereichs 5 angepresst ist.

Der Stift 4 begrenzt die Schraube 3 beim Herausschrauben der Schraube 3 aus der Gewindebohrung. Somit wird dann beim Anliegen des Schraubenkopfes der Schraube 3 am Stift 4 der Klemmbereich 5 immer weiter aufgedehnt und somit das Kupplungsteil 1 gelöst von der zuvor mit ihm klemmverbundenen Welle. Sogar bei Vorliegen von Korrosion wird das Lösen ohne großen Kraftaufwand ermöglicht.

Der Stift 4 ist senkrecht zur Schraube 3 ausgerichtet. Die Schraube 3 ist tangential zu einem zur Welle und/oder zum Klemmbereich konzentrischen Kreis ausgerichtet.

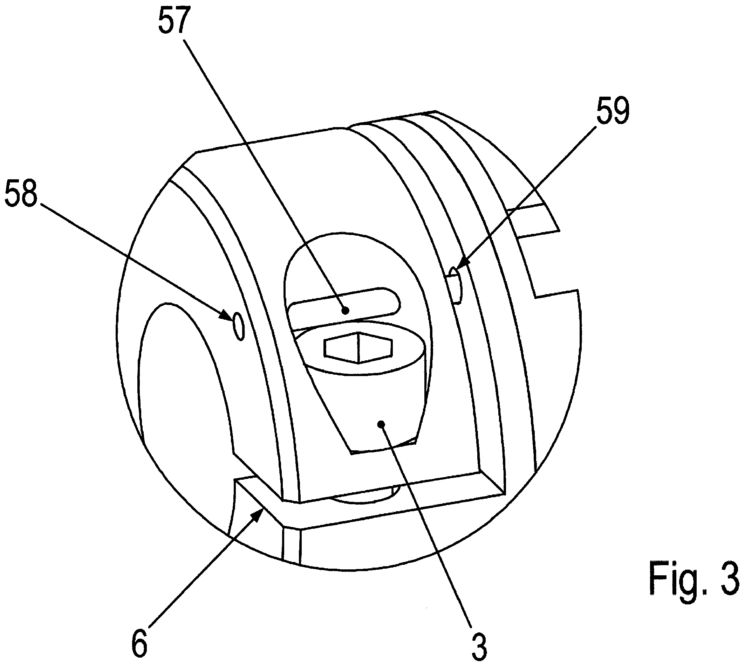

Wie in Figur 3 ausgeführt, ist im Unterschied zu dem in Figur 1 und 2 nur im Klemmbereich des ersten Kupplungsteils vorgesehenen Stiftes 4 ein Stift 57 vorgesehen, der axial beidseitig im Klemmbereich gestützt ist und in einem Langloch 59 des Klauenbereichs 2 endet.

Der Stift 57 ist also parallel zur Drehachse der Welle, gerichtet.

Der Stift 57 ist in eine in den Klemmbereich 5 eingebrachte und durchgehende, unterbrochene Bohrung teilweise eingesteckt. Somit ragt ein zwischen den beiden im Klemmbereich 5 angeordneten Bohrungsbereichen angeordneter Bereich des Stiftes 57 hervor in den Raumbereich der Stufenbohrung hinein.

Der Stift 57 begrenzt dabei die Schraube 3 beim Herausschrauben der Schraube 3 aus der Gewindebohrung. Somit wird dann beim Anliegen des Schraubenkopfes der Schraube 3 am Stift 57 der Klemmbereich 5 immer weiter aufgedehnt, insbesondere also die Schlitzweite vergrößert, und somit das Kupplungsteil 1 gelöst von der zuvor mit ihm klemmverbundenen Welle. Sogar bei Vorliegen von Korrosion wird das Lösen ohne großen Kraftaufwand ermöglicht.

Allerdings reicht der Stift 57 bis in ein in den Kupplungsbereich 2 eingebrachtes Langloch 59 hinein. Dieses Langloch 59 weist in Umfangsrichtung seine größte Ausdehnung auf. Der Stift 57 ist in das im Klemmbereich 5 angeordnete als Rundloch 58 ausgeführte Loch eingepresst. Somit ist er spielfrei mit dem Klemmbereich verbunden und wird bei Aufspreizen des Schlitzes 6 mitbewegt, bis er an einem Endbereich des Langlochs 59 anliegt.

Somit ist durch geeignete Positionierung und Dimensionierung des Langlochs 59 die Schlitzweite des Schlitzes 6 zu kleinen und zu großen Werten hin begrenzbar.

Mittels des Stiftes 57 ist also der vom Langloch 59 vorgegebene Wertebereich der Schlitzweite des Schlitzes 6 eingehalten und außerdem der Bewegungsraumbereich der Schraube 3 begrenzt.

Der Stift 57 ist senkrecht zur Schraube 3 ausgerichtet, die tangential zu einem zur Welle und/oder zum Klemmbereich konzentrischen Kreis ausgerichtet ist.

Das maximale Klemmdrehmoment wäre bei Verschwinden der Schlitzweite erreicht. Um eine Beschädigung der Welle beim Einschrauben der Schraube 3 in die Gewindebohrung zu vermeiden, ist aber die Begrenzung der Schlitzweite auf einen nicht verschwindenden Wert durch das Langloch 59 erreicht, welches im Klauenbereich 56 angeordnet ist.

Wie oben gesagt, begrenzt das Langloch 59 aber auch die Schlitzweite nach oben, also zu einem Maximalwert hin.

Die Kupplung, umfassend das erste Klauenkupplungsteil 1 und das weitere Kupplungsteil sind radial umgeben von einem Adaptergehäuse, welches einteilig oder mehrteilig aufgebaut ist und eine radial durchgehende Ausnehmung aufweist, durch welche hindurch die Schraube 3 mittels eines Werkzeugs, insbesondere Sechskantwerkzeug 51, betätigbar ist.

Die Ausnehmung überdeckt also denselben axialen Bereich und - zumindest bei geeigneter Drehstellung der Welle - denselben Umfangswinkelbereich wie der Schraubenkopf der Schraube 3.

Die axiale Richtung ist parallel zur Drehachse der Welle ausgerichtet.

Das Langloch 59 ist durch den Klauenbereich 2 axial durchgehend ausgeführt.

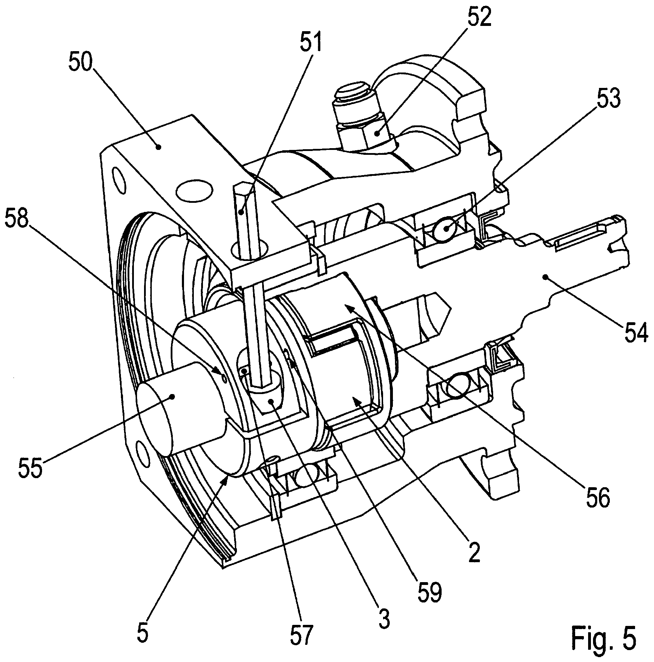

Wie in Figur 5 gezeigt, ist der Klemmbereich des ersten Kupplungsteils mit der Rotorwelle 55 eines Elektromotors kraftschlüssig verbunden, indem die Schraube 3 mittels eines Sechskantwerkzeugs 51 betätigt wird. Hierfür weist das Gehäuseteil 50 des Adapters eine durchgehende Ausnehmung auf, durch welche das Sechskantwerkzeug bis zur Schraube 3 durchführbar ist.

Das Gehäuseteil 50 ist schraubverbunden mit einem Gehäuseteil des Elektromotors und mit dem Gehäuseteil des Getriebes. Dabei weist das Gehäuseteil des Getriebes eine durchgehende Ausnehmung auf, welche in einen Kanal mündet, welcher im Gehäuseteil 50 des Adapters verläuft und in die Umgebung mündet, wobei die Mündungsöffnung durch eine Entlüftungsschraube verschlossen ist.

Somit ist eine Entlüftung des teilweise mit Getriebeöl befüllten Innenraumes des Getriebes mittels der Entlüftungsschraube 52 ermöglicht, die aber am Adapter angeordnet ist.

Im Gehäuseteil 50 des Adapters ist ein Lager 53 aufgenommen, mittels dessen eine Adapterwelle 54 drehbar gelagert ist, welche mit einem Klauenbereich 56 der Klauenkupplung drehfest verbunden und/oder einstückig, also einteilig, ausgeführt ist.

Die Adapterwelle 54 ragt in das Getriebe hinein. An ihrem Getriebeseitigen axialen Endbereich ist ein Verzahnungsteil, insbesondere Aufsteckritzel, drehfest, insbesondere mittels Passfederverbindung, mit der Adapterwelle 54 verbunden. Dieses Verzahnungsteil fungiert als eintreibendes Verzahnungsteil des Getriebes, so dass die Verzahnung des Verzahnungsteils mit einer Verzahnung eines weiteren Verzahnungsteils des Getriebes im Eingriff ist.

Die Schraube 3 ist nur in einer bestimmten Drehstellung des ersten Kupplungsteils 1 vom Sechskantwerkzeug 51 betätigbar.

Der Klauenbereich 56 überlappt mit dem Klauenbereich 2 der Klauenkupplung axial derart, dass die Adapterwelle 54 und das erste Kupplungsteil 1 in Umfangsrichtung formschlüssig verbunden sind. In Umfangsrichtung zwischen den beiden Klauenbereichen 2 und 56 ist vorzugsweise ein Strahlenbereich eines sternförmigen Kunststoffteils angeordnet. Der Strahlenbereich ist vorzugsweise ballig ausgeführt. Somit ist der in Umfangsrichtung gemessene Wandstärkenverlauf des Strahlenbereichs ballig, nimmt als von radial innen nach außen zunächst zu und dann wieder ab.

### Bezugszeichenliste

1 Kupplungsteil einer Klauenkupplung
2 Klauenbereich
3 Schraube
4 Stift, axial gerichtet
5 Klemmbereich
6 Schlitz
50 Gehäuseteil, insbesondere Adaptergehäuseteil
51 Sechskantwerkzeug
52 Entlüftungsschraube
53 Lager
54 Adapterwelle
55 Motorwelle, Rotorwelle
56 Klauenbereich der Adapterwelle 54
57 Stift
58 Rundloch
59 Langloch

## Patentansprüche

1. Antriebsvorrichtung, aufweisend zumindest eine Kupplung und eine Welle,
wobei die Kupplung als Klauenkupplung ausgeführt ist,
wobei in der Kupplung ein Klemmbereich (5) zur Klemmverbindung mit der Welle integriert ist,
wobei der Klemmbereich (5) mittels einer Schraube (3) betätigbar ist, **dadurch gekennzeichnet, dass**
- der Bewegungsraumbereich der Schraube (3) durch einen Stift (57) begrenzt ist, insbesondere welcher in eine Ausnehmung des Klemmbereichs (5) zumindest teilweise eingeführt ist und in Schraubachsrichtung der Schraube (3) den Bewegungsraumbereich dieser Schraube (3) begrenzt,
- und/oder wobei der beim Betätigen der Schraube (3) von der Schraube (3) überdeckte Raumbereich, insbesondere der Bewegungsraumbereich und/oder bei der Bewegung der Schraube (3) insgesamt überdeckte Raumbereich, mittels eines in eine Ausnehmung des Klemmbereichs zumindest teilweise eingeführten Stiftes (57) in Schraubachsrichtung der Schraube (3) begrenzt ist,
wobei der Stift (57) in der Ausnehmung des Klemmbereich (5) spielfrei verbunden ist, insbesondere eingepresst ist,
wobei der Stift (57) in ein Langloch (59) zumindest teilweise hineinragt, welches in einen Klauenbereich (2) der Kupplung eingebracht ist,
so dass der Stift (57) bis in den in den Kupplungsbereich (2) eingebrachtes Langloch (59) hineinreicht,
wobei das Langloch (59) vom Klemmbereich beabstandet ist.
wobei das Langloch (59) in Umfangsrichtung seine größte Ausdehnung aufweist,
wobei der Stift (57) in das im Klemmbereich (5) angeordnete als Rundloch (58) ausgeführte Loch eingepresst ist, wobei der Stift (57) spielfrei mit dem Klemmbereich (5) verbunden ist und mittels Aufspreizen des Schlitzes (6) mitbewegt ist und an einem Endbereich des Langlochs (59) anliegt.

2. Antriebsvorrichtung nach Anspruch 1
**dadurch gekennzeichnet, dass**
der Stift (57) axial ausgerichtet ist und beidseitig im Klemmbereich (5) aufgenommen ist.

3. Antriebsvorrichtung nach mindestens einem der vorangegangenen Ansprüche,
**dadurch gekennzeichnet, dass**
das Langloch (59) axial durchgehend durch den Klauenbereich (2) ausgeführt ist.

4. Antriebsvorrichtung nach einem der Ansprüche 1 bis 3,
**dadurch gekennzeichnet, dass**
der Stift (57) und das erste Kupplungsteil (1) beide aus Stahl oder beide aus Aluminium gefertigt sind.

5. Antriebsvorrichtung nach einem der Ansprüche 1 bis 4,
**dadurch gekennzeichnet, dass**
der Stift (57) axial ausgerichtet ist und beidseitig im Klemmbereich (5) aufgenommen ist, wobei
er in einer ersten axial gerichteten Bohrung des Klemmbereichs (5) zumindest teilweise aufgenommen ist und wobei er in einer zweiten, axial gerichteten Bohrung zumindest teilweise aufgenommen ist,
wobei die erste Bohrung durch den Klemmbereich (5) durchgehend ausgeführt ist, insbesondere in den Raumbereich der Stufenbohrung mündend ausgeführt ist,
wobei die zweite Bohrung durchgehend durch den Klemmbereich (5) ausgeführt ist. insbesondere in den Raumbereich der Stufenbohrung mündend ausgeführt ist.

6. Antriebsvorrichtung nach mindestens einem der vorangegangenen Ansprüche,
**dadurch gekennzeichnet, dass**
der Stift (57) als Begrenzungsteil für die Schraube (3) fungiert.

7. Antriebsvorrichtung nach mindestens einem der vorangegangenen Ansprüche,
**dadurch gekennzeichnet, dass**
die Antriebsvorrichtung einen Elektromotor aufweist, dessen Welle mittels der Kupplung mit der eintreibenden Welle eines Getriebes der Antriebsvorrichtung verbunden ist,
wobei die Kupplung in einem Adaptergehäuse, insbesondere Gehäuseteil 50, angeordnet ist, welches eine durchgehende Ausnehmung aufweist, welche den von der Schraube (3) überdeckten axialen Bereich überdeckt, insbesondere so dass ein Werkzeug zum Betätigen der Schraube (3) durch die durchgehende Ausnehmung durchführbar ist.

8. Antriebsvorrichtung nach mindestens einem der vorangegangenen Ansprüche,
**dadurch gekennzeichnet, dass**
das Adaptergehäuse, insbesondere das Gehäuseteil 50, schraubverbunden ist mit einem Gehäuseteil des Elektromotors und mit einem Gehäuseteil des Getriebes,
wobei das Adaptergehäuse einen Kanal aufweist, welcher in den Innenraum des Getriebes oder in eine durch das Gehäuseteil des Getriebes durchgehende Ausnehmung mündet,
wobei der Kanal zur Umgebung hin mit einer Entlüftungsschraube, insbesondere mit einer eine semipermeable Membran aufweisenden Entlüftungsschraube, verschlossen ist, insbesondere derart, dass ein Luftdruckausgleich vom Innenraum des Getriebes zur Umgebung hin erfolgt, aber kein Austritt von Getriebeöl.

## Claims

1. Drive device comprising at least one clutch and a shaft,
wherein the clutch is configured as a dog clutch,
wherein a clamping region (5) for clampingly connecting to the shaft is integrated in the clutch,
wherein the clamping region (5) can be actuated by means of a screw (3),
**characterised in that**
- the range of motion of the screw (3) is limited by a pin (57), which in particular is inserted at least in part into an opening of the clamping region (5) and limits the range of motion of the screw (3) in the screw-axis direction of said screw (3),
- and/or wherein the spatial range, in particular the range of motion, covered by the screw (3) when the screw (3) is actuated, and/or the spatial range covered overall when the screw (3) moves, is limited in the screw-axis direction of the screw (3) by means of a pin (57) inserted at least in part into an opening of the clamping region,
wherein the pin (57) is connected, in particular pressed, in the opening of the clamping region (5) without play,
wherein the pin (57) projects at least in part into a slot (59), which is made in a claw region (2) of the clutch such that the pin (57) reaches as far as into the slot (59) made in the clutch region (2), wherein the slot (59) is spaced apart from the clamping region,
wherein the slot (59) has its largest extent in the circumferential direction, wherein the pin (57) is pressed into the hole that is arranged in the clamping region (5) in the form of a round hole (58), wherein the pin (57) is connected to the clamping region (5) without play, is moved along by way of the slit (6) spreading apart, and abuts an end region of the slot (59).

2. Drive device according to claim 1,
**characterised in that**
the pin (57) is oriented axially and is borne on both sides in the clamping region (5).

3. Drive device according to at least one of the preceding claims,
**characterised in that**
the slot (59) is configured to be axially continuous through the claw region (2).

4. Drive device according to any of claims 1 to 3,
**characterised in that**
the pin (57) and the first clutch part (1) are both made of steel or both made of aluminium.

5. Drive device according to any of claims 1 to 4,
**characterised in that**
the pin (57) is oriented axially and is borne on both sides in the clamping region (5), wherein said pin is borne at least in part in a first axially oriented bore of the clamping region (5) and is borne at least in part in a second axially oriented bore,
wherein the first bore is configured to be continuous through the clamping region (5), in particular configured to open into the spatial region of the stepped bore,
wherein the second bore is configured to be continuous through the clamping region (5), in particular configured to open into the spatial region of the stepped bore.

6. Drive device according to at least one of the preceding claims,
**characterised in that**
the pin (57) acts as a limiting part for the screw (3).

7. Drive device according to at least one of the preceding claims,
**characterised in that**
the drive device has an electric motor, the shaft of which is connected to the input shaft of a gearing of the drive device by means of the clutch,
wherein the clutch is arranged in an adapter housing, in particular a housing part 50, which has a through-opening that covers the axial region covered by the screw (3), in particular such that a tool for actuating the screw (3) can be guided through the through-opening.

8. Drive device according to at least one of the preceding claims,
**characterised in that**
the adapter housing, in particular the housing part 50, is screw-connected to a housing part of the electric motor and to a housing part of the gearing,
wherein the adapter housing has a channel that opens into the interior of the gearing or into an opening extending through the housing part of the gearing,
wherein the channel is sealed towards the surroundings by a bleed screw, in particular by a bleed screw having a semipermeable membrane, in particular such that an air pressure equalisation from the interior of the housing to the surroundings takes place but without any gear oil escaping.

## Revendications

1. Dispositif d'entraînement comprenant au moins un accouplement et un arbre, l'accouplement étant réalisé sous la forme d'un accouplement à griffes,
une zone de serrage (5) étant intégrée dans ledit accouplement, en vue de la liaison par serrage avec l'arbre,
laquelle zone de serrage (5) peut être actionnée au moyen d'une vis (3),
**caractérisé par le fait**
- **que** la plage spatiale de mouvement de la vis (3) est limitée par une goupille (57) qui, en particulier, est au moins partiellement introduite dans un évidement de la zone de serrage (5) et limite la plage spatiale de mouvement de la vis (3) dans la direction axiale de ladite vis (3) ;
- et/ou par le fait que la plage spatiale couverte par la vis (3) lors de l'actionnement de ladite vis (3), notamment la plage spatiale de mouvement, et/ou la plage spatiale globalement couverte lors d'un mouvement de ladite vis (3), est (sont) limitée(s), dans ladite direction axiale de la vis (3), au moyen d'une goupille (57) au moins partiellement introduite dans un évidement de ladite zone de serrage,
ladite goupille (57) étant reliée avec absence de jeu, notamment emmanchée à force, dans ledit évidement de la zone de serrage (5),
laquelle goupille (57) pénètre, au moins en partie, dans un trou oblong (59) pratiqué dans une zone d'agriffage (2) de l'accouplement,
de façon telle que ladite goupille (57) s'étende jusque dans ledit trou oblong (59) pratiqué dans la zone d'accouplement (2),
lequel trou oblong (59) est situé à distance de la zone de serrage,
sachant que ledit trou oblong (59) présente son étendue maximale dans la direction circonférentielle,
la goupille (57) étant emmanchée à force dans le trou situé dans la zone de serrage (5) et réalisé sous la forme d'un trou circulaire (58), sachant que ladite goupille (57) est reliée à ladite zone de serrage (5) avec absence de jeu, est mue conjointement par écartement de la fente (6) et est en applique contre une région extrême dudit trou oblong (59).

2. Dispositif d'entraînement selon la revendication 1,
**caractérisé par le fait que**
la goupille (57) est orientée axialement et est logée, de part et d'autre, dans la zone de serrage (5).

3. Dispositif d'entraînement selon au moins l'une des revendications précédentes,
**caractérisé par le fait que**
le trou oblong (59) est conçu pour traverser la zone d'agriffage (2) de manière ininterrompue dans le sens axial.

4. Dispositif d'entraînement selon l'une des revendications 1 à 3,
**caractérisé par le fait que**
la goupille (57) et la première partie (1) de l'accouplement sont fabriquées l'une et l'autre en acier, ou l'une et l'autre en aluminium.

5. Dispositif d'entraînement selon l'une des revendications 1 à 4,
**caractérisé par le fait que**
la goupille (57) est orientée axialement et est logée, de part et d'autre, dans la zone de serrage (5), sachant qu'elle est au moins partiellement logée dans un premier alésage de ladite zone de serrage (5), orienté axialement, et qu'elle est au moins partiellement logée dans un second alésage orienté axialement,
ledit premier alésage étant conçu pour traverser la zone de serrage (5) manière ininterrompue, en débouchant notamment dans la région spatiale de l'alésage étagé,
ledit second alésage étant conçu pour traverser ladite zone de serrage (5) manière ininterrompue, en débouchant notamment dans la région spatiale dudit alésage étagé.

6. Dispositif d'entraînement selon au moins l'une des revendications précédentes,
**caractérisé par le fait que**
la goupille (57) remplit la fonction d'une pièce de limitation dévolue à la vis (3).

7. Dispositif d'entraînement selon au moins l'une des revendications précédentes,
**caractérisé par le fait que**
ledit dispositif d'entraînement est équipé d'un moteur électrique dont l'arbre est relié, au moyen de l'accouplement, à l'arbre d'entrée d'une transmission dudit dispositif d'entraînement,
ledit accouplement étant logé dans un boîtier adaptateur, notamment dans une partie (50) formant carter qui est munie d'un évidement ininterrompu couvrant la région axiale couverte par la vis (3), en particulier de façon telle qu'un outil, affecté à l'actionnement de ladite vis (3), puisse être engagé d'un trait à travers ledit évidement ininterrompu.

8. Dispositif d'entraînement selon au moins l'une des revendications précédentes,
**caractérisé par le fait que**
le boîtier adaptateur, notamment la partie (50) formant carter, est relié(e) par vissage à une partie formant carter du moteur électrique et à une partie formant carter de la transmission,
ledit boîtier adaptateur étant pourvu d'un canal débouchant dans l'espace interne de la transmission ou dans un évidement traversant, de manière ininterrompue, ladite partie formant carter de la transmission,
lequel canal est obturé, en direction de l'espace environnant, à l'aide d'une vis d'évent et notamment d'une vis d'évent dotée d'une membrane semi-perméable,
en particulier de telle sorte qu'il s'opère un équilibrage de pression d'air en direction dudit espace environnant, à partir dudit espace interne de la transmission, mais aucune sortie d'huile de ladite transmission.
